# EUROPÄISCHE PATENTSCHRIFT

(11) **EP 3 260 255 B1**
(45) Veröffentlichungstag und Bekanntmachung des Hinweises auf die Patenterteilung: **21.08.2019**
(21) Anmeldenummer: 16176288.5
(22) Anmeldetag: 24.06.2016
(51) Int. Cl.: B26D 5/00, B26D 5/34, B26F 1/38, C14B 5/00, C14B 17/00, G06F 3/01

(54) **SYSTEM ZUM SCHNEIDEN VON SCHNEIDGUT**
SYSTEM FOR CUTTING
SYSTÈME POUR LA DÉCOUPE D'UN PRODUIT

(43) Veröffentlichungstag der Anmeldung: 27.12.2017
(73) Patentinhaber: ZÜND SYSTEMTECHNIK AG, 9450 Altstätten (CH)
(72) Erfinder: ZÜND, Oliver, 9450 Lüchingen (CH); LEDERGERBER, Daniel, 9445 Rebstein (CH)
(74) Vertreter: Kaminski Harmann

(56) Entgegenhaltungen:
- EP-A1- 2 527 103
- WO-A1-2005/045729
- WO-A1-2006/114698
- CAUDELL T P ET AL: "Augmented reality: an application of heads-up display technology to manual manufacturing processes", SYSTEM SCIENCES, 1992. PROCEEDINGS OF THE TWENTY-FIFTH HAWAII INTERNAT IONAL CONFERENCE ON KAUAI, HI, USA 7-10 JAN. 1992, LOS ALAMITOS, CA, USA,IEEE COMPUT. SOC, US, Bd. ii, 7. Januar 1992 (1992-01-07), Seiten 659-669, XP010025955, DOI: 10.1109/HICSS.1992.183317 ISBN: 978-0-8186-2420-9

## Beschreibung

Die Erfindung betrifft ein System und ein Verfahren zum Schneiden von im Wesentlichen flächigem Schneidgut, insbesondere Papier-, Karton-, Wellpappe-, Folien-, Textil-, Kunststoff-, Leder-, Metall-, Schaumstoff- oder Holz-Platten oder -Bögen, nach Anspruch 1 bzw. Anspruch 14.

Vorrichtungen zum Schneiden von steifem oder biegeschlaffem flächigem Schneidgut sind aus dem Stand der Technik bekannt. Typischerweise beinhalten sie eine Schneideinheit mit einem horizontalen Schneidtisch zum Auflegen des Schneidguts. Unter Schneidgut ist allgemein ein steifes oder biegeschlaffes flächiges Schneidgut, beispielsweise eine Platte aus Karton, Well- oder Vollpappe, einen Bogen aus Folie oder Papier, ein Material wie Leder oder gewobenen Stoffe, eine Kunststoff-, Schaumstoff-, Vinyl-, PVC-, Acryl- oder Holz-Platten bzw. ein entsprechender Bogen zu verstehen. Die Dicke eines solchen Schneidguts, das auch von einer Rolle abgerollt sein kann, beträgt beispielsweise unter einem Mikrometer oder bis über zehn Zentimeter.

Oberhalb des Schneidtisches ist ein Schneidwerkzeug geführt, das innerhalb eines meist rechteckigen Schneidbereichs, der vorzugsweise die Fläche des Schneidguts vollständig abdeckt, parallel zum Schneidgut, meist entlang zweier rechtwinkliger Achsen, mittels mehrerer Motoren verstellt werden kann. Das Schneidwerkzeug ist insbesondere an einem verstellbaren Schneidkopf angeordnet, der beispielsweise mit einer Kamera und/oder einer Absaugung ausgestattet ist. Um das Schneidwerkzeug teilweise oder vollständig in Eingriff mit dem Schneidgut zu bringen, ist das Schneidwerkzeug vorzugsweise senkrecht dazu verstellbar.

Das Schneidwerkzeug kann als ein statisches Messer mit festem oder variablem Messerandruck z.B. zum Schneiden von Folie, Polypropylen oder Karton, als ein insbesondere elektrisch oder pneumatisch angetriebenes, beispielsweise oszillierendes Messer z.B. zum Schneiden von Leichtschaum, Wellpappe, Leder, Schaumstoff, Gummi oder Filz, als rotierendes Messer z.B. zum Schneiden von fasrigem Material wie Textilien, Mesh oder Ballonseide, als Fräse zum Schneiden von starrem Material wie Hartschaum, Acryl, Verbundmaterial oder Holz, oder als Rillwerkzeug zum Erzeugen von Rillen insbesondere in Wellpappe, Polypropylen oder Vollkarton ausgebildet sein. Ausserdem ist es möglich, das Schneidwerkzeug als Laser-, Druckluft- oder Wasserstrahl-Schneidwerkzeug oder als ein sonstiges Werkzeug, insbesondere als ein Stanzwerkzeug, das zum spanenden oder spanlosen, teilweisen oder vollständigen Trennen des Schneidguts oder zum Erzeugen von Schnittbahnen oder Löchern geeignet ist, auszubilden.

Um ein Verrutschen des Schneidguts während des Schneidens zu verhindern, sehen aus dem Stand der Technik bekannte Schneideinheiten eine Schneidunterlage auf dem Schneidtisch vor, die von der Unterseite mit Unterdruck beaufschlagbar ist, so dass das Schneidgut auf dem Schneidtisch fixiert wird.

Das Schneidwerkzeug ist bei den bekannten Schneideinheiten mittels einer elektronischen Steuerung frei ansteuerbar, so dass es möglich ist, aus bedrucktem oder unbedrucktem Schneidgut nahezu beliebig geformte, beispielsweise zweidimensionale, jedoch auch dreidimensionale Segmente zu schneiden. Die Schneidbahnen können mittels eines Rechners frei programmiert werden.

Derartige Schneideinheiten, die auch als "Digital Cutter" bekannt sind, kommen insbesondere im Bereich der Graphikindustrie zur Erzeugung von Displays für Werbezwecke und geformten Klebefolien, beispielsweise zur Herstellung von Verkehrsschildbeschriftungen, im Bereich der Verpackungsindustrie zur Herstellung von zusammenfaltbaren Kartonagen, in der Bekleidungsindustrie zur Erzeugung von Stoff- oder Lederzuschnitten oder in der Möbelindustrie bei der Herstellung von Holz- oder Kunststoff-, insbesondere Acrylzuschnitten zur Anwendung. Eine derartige Schneideinheit ist beispielsweise der "G3 DIGITAL CUTTER" der Firma ZÜND Systemtechnik AG in Altstätten, Schweiz, mit einem Arbeitsbereich von bis zu 3200 x 3200 Millimeter.

Eine besondere Herausforderung stellen sowohl der Transport und das Auflegen des Schneidguts auf den Schneidtisch, als auch der Abtransport des geschnittenen Schneidguts von dem Schneidtisch dar. Um den Transfer des Schneidguts zu erleichtern, besitzen zahlreiche Schneideinheiten ein über den Schneidtisch gespanntes Förderband, welches entlang einer Richtung verstellbar ist. Das Förderband dient in diesem Falle als Schneidunterlage und bildet mit seiner Oberseite funktional den Schneidtisch. Um die Oberseite des Förderbandes horizontal und eben zu halten, wird das Förderband mit seiner Oberseite vorzugsweise über eine ebene Unterlage geführt. Mittels des Förderbandes ist es möglich, das Schneidgut in den Schneidbereich des Scheidwerkzeuges hinein und wieder heraus zu führen.

Beim Auflegen des Schneidguts ist oftmals wichtig, das Schneidgut gemäss einer Soll-Position zu platzieren. Besonders beim händischen Auflegen ist der Benutzer hierbei auf entsprechende Soll-Positions-Information angewiesen. Vorteilhaft wäre hier eine einfach zugängliche und intuitive Bereitstellung und fortlaufende Aktualisierung dieser Information für den Benutzer.

Aus dem Stand der Technik sind zudem Schneidvorrichtungen bekannt, welche über Prüfmittel verfügen, die zur Inspektion des Schneidguts vor dem Schneidevorgang hinsichtlich bestimmter Qualitätsmerkmale dienen. Ein möglicher Ablauf kann dabei vorsehen: Das Schneidgut wird in einem vorgelagerten Prozess begutachtet und in Qualitätszonen und Fehlstellen eingeteilt. Auf der Schneidvorrichtung werden dann mit einem Prüfmittel die zuvor markierten Zonen erfasst und allenfalls mittels Visualisierungsmittel (Projektor) visualisiert. Beispielsweise können damit Materialfehler oder Zonen unterschiedlicher Qualität in einem Schneidgut (hier insbesondere Leder) eingelesen und beim Schneidevorgang automatisch berücksichtigt werden, z.B. in dem Fehlerstellen ausgespart oder zu schneidende Teile mit hohen Qualitätsanforderungen gezielt aus den zuvor ermittelten Bereiche hoher Qualität ausgeschnitten werden. Die einzelnen zu schneidenden Teile können dabei mittels Visualisierung (etwa durch einen oberhalb des Tisches montierten Projektor, der etwa u.a. die Konturen der für die Teile vorgesehenen Schneidlinien anzeigt) auf dem Schneidgut erkennbar gemacht werden, damit die jeweiligen Positionen der einzelnen Teile durch den Bediener überprüft und bei Bedarf abgeändert werden können. Nachteilig an diesen bekannten Visualisierungsmitteln ist, dass diese relativ aufwändig und in rauer Arbeitsumgebung fehleranfällig und damit kostenintensiv sind.

Das Entfernen oder Absortieren des geschnittenen Guts, das sich abhängig von dem gewählten Schnitt aus einer Vielzahl an nicht oder teilweise zusammenhängenden Segmenten zusammensetzt, kann je nach Komplexität des Schnitts und Qualitätsanforderungen manuell oder automatisch erfolgen.

Liegen nach dem Schneiden Schnittstücke unterschiedlichen Typs bzw. Kategorie vor, sind hinsichtlich eines händischen Absortierens aus dem Stand der Technik Vorrichtungen bekannt, welche einen Projektor aufweisen, der die Schnittstücke für einen Benutzer unterschiedlich markiert, z.B. farblich, mit Symbolen oder/oder mit Text. Anhand dieser schneidteilerelevanten Information, also z.B. je nach auf das Schnittstück projizierter Markierung, weiss dann der Benutzer, zu welcher Kategorie das jeweilige geschnittene Teil gehört und damit, in welche Ablage es einzusortieren ist. Nachteilig an diesen bekannten Projektoren ist, dass diese relativ aufwändig und besonders in rauer Arbeitsumgebung störanfällig und damit kostenintensiv sind.

Aufgabe der Erfindung ist es daher, ein verbessertes System zum Schneiden von flächigem Schneidgut, insbesondere Papier-, Karton-, Wellpappe-, Folien-, Textil-, Kunststoff-, Schaumstoff- oder Holz-Platten oder -Bögen, bereitzustellen.

Eine weitere Aufgabe der Erfindung ist es daher, ein System zum Schneiden von flächigem Schneidgut, insbesondere Papier-, Karton-, Wellpappe-, Folien-, Textil-, Kunststoff-, Schaumstoff- oder Holz-Platten oder -Bögen, bereitzustellen, welches eine verbesserte Bereitstellung von schneidgutbezogener Information für einen Benutzer ermöglicht.

Eine weitere Aufgabe der vorliegenden Erfindung ist es, ein System zum Schneiden von flächigem Schneidgut bereitzustellen, welches eine verbesserte Benutzerführung ermöglicht.

Diese Aufgabe wird durch die Verwirklichung der Merkmale des unabhängigen Anspruchs gelöst. Merkmale, die die Erfindung in alternativer oder vorteilhafter Weise weiterbilden, sind den abhängigen Patentansprüchen zu entnehmen.

Das erfindungsgemässe System zum Schneiden von flächigem Schneidgut, insbesondere Papier-, Karton-, Wellpappe-, Folien-, Textil-, Kunststoff-, Schaumstoff- oder Holz-Platten oder -Bögen, weist eine Schneidevorrichtung auf mit einem Schneidtisch zum Auflegen von zu schneidendem Schneidgut und einem Schneidwerkzeug, das oberhalb des Schneidtischs angeordnet ist, innerhalb eines Schneidbereichs parallel zum Schneidtisch verstellbar ist und mittels welchem ein auf dem Schneidtisch aufgelegtes, zu schneidendes Schneidgut in dem Schneidbereich schneidbearbeitbar ist. Das System weist weiter einen Speicher auf, der ausgebildet ist zur Speicherung schneidgutbezogener Information, welche mittels einer Datenverbindung von einer Anzeigevorrichtung des Systems abrufbar ist, und eine Recheneinheit zur Berechnung einer Position und Ausrichtung der Anzeigevorrichtung relativ zur Schneidevorrichtung, insbesondere relativ zum Schneidtisch. Besagte Anzeigevorrichtung weist ein Display auf und ist ausgebildet zur Darstellung von augmented reality und zum Tragen durch einen Benutzer und Positionierung im Sichtfeld des Benutzers.

Dadurch ist das System ausgebildet, dem Benutzer abgerufene schneidgutbezogene Information mittels des Displays vom Benutzer ablesbar im Sichtfeld des Benutzers, angepasst an die Position und Ausrichtung der Anzeigevorrichtung relativ zur Schneidevorrichtung und verknüpft mit einer Ist- und/oder Soll-Position des Schneidguts anzuzeigen.

In vorteilhaften Ausführungsformen ist die Anzeigevorrichtung ausgebildet als augmented-reality-Brille oder Kopfbedeckung, z.B. ein Helm, mit Head-up-Display.

Vorzugsweise ist die schneidgutbezogene Information bezogen auf eine oder mehrere zu schneidende Konturen (Schnittformen) und/oder eine oder mehrere Kennzeichnungen des Schneidguts (beispielsweise bezogen auf eine eindeutige Identifikation des Schneidguts), und/oder eine oder mehrere Registriermarken zur Positionierung des Schneidwerkzeugs. Alternativ oder zusätzlich ist die schneidgutbezogene Information bezogen auf eine oder mehrere Ist- oder Soll-Positionen und/oder Ist- oder Soll-Ausrichtungen des Schneidguts oder von Teilen davon, insbesondere zwecks händischen Platzierens des Schneidguts auf dem Schneidtisch vor dem Schneiden durch den Benutzer. Als zusätzliche Alternative oder weiterer Zusatz ist die Information bezogen auf eine Kategorisierung von geschnittenen Teilen, insbesondere zwecks händischer Absortierung, und/oder auf Qualitätszonen des Schneidguts.

In vorteilhaften Ausführungsformen ist das System ausgebildet zur Darstellung wenigstens eines Teils der schneidgutbezogenen Informationen als Grafik, insbesondere wobei die Grafik das Schneidgut wenigstens teilweise positionsspezifisch überlagernd darstellbar ist. Solche Grafiken sind z.B. Symbole oder Farb- oder Musterbereiche.

Optional ist das System ausgebildet zur Verwendung solcher Grafiken zur grafischen Kennzeichnung von Qualitätszonen, insbesondere mittels Grafiken mit unterschiedlicher Farbe oder Muster und/oder zu schneidenden Konturen, insbesondere mittels Linien, und/oder Absortierungskategorien, insbesondere mittels Grafiken mit unterschiedlicher Farbe oder Muster. Dabei ist optional das System derart ausgebildet, dass die Darstellung der grafischen Kennzeichnung derart angepasst an die Position und Ausrichtung der Anzeigevorrichtung relativ zur Schneidevorrichtung erfolgt, dass im Sichtfeld des Benutzers die grafische Kennzeichnung den jeweiligen Bereich des Schneidguts passgenau und formtreu überlagernd dargestellt wird. Dies vorteilhaft auch fortlaufend bei etwaiger Änderung der Position und Ausrichtung der Anzeigevorrichtung relativ zur Schneidevorrichtung, beispielsweise bedingt durch Bewegungen des Benutzers bzw. Änderung seiner Blickrichtung, welcher die Anzeigevorrichtung trägt.

In einer Fortbildung ist das System ausgebildet zur Benutzerführung mittels des Displays anhand der schneidgutbezogenen Informationen, insbesondere zur Führung des Benutzers beim Platzieren eines Schneidguts auf dem Schneidtisch und/oder Absortieren geschnittener Teile. Hierbei erfolgt die Benutzerführung vorteilhaft mittels grafischer Symbole, z.B. Pfeile oder geometrischer Zeichen, welche zusätzlich animiert sein können.

Beispielsweise kann damit der Benutzer das Schneidgut genauer und/oder unter weniger Aufwand auf dem Schneidtisch angrenzend an eine oder zwei vorgegebene Linien auf dem Tisch platzieren, indem diese Linie bzw. Linien als künstliche Linien im Display der Realität an der entsprechenden Stelle überlagert dargestellt werden. Zudem können damit z.B. auch Informationen bzgl. eines Zonenvakuums angezeigt werden, sodass der Benutzer einfach erkennt, welche Bereiche des Schneidtisches für das Vakuum freigeschaltet sind und welche nicht.

In besonders vorteilhaften Ausführungsformen weist die Anzeigevorrichtung eine Kamera auf zur Aufnahme von Live-Bildern, z.B. Einzelbilder oder in Form von Videos. Optional ist in solchen Ausführungsformen die Recheneinheit ausgebildet zur Bestimmung von Position und Ausrichtung der Anzeigevorrichtung relativ zur Schneidevorrichtung anhand wenigstens eines von der Kamera aufgenommenen Live-Bildes wenigstens eines als Positionsreferenz dienenden Teils der Schneidevorrichtung. Hierzu weist als Option die Schneidevorrichtung optische Markierungen auf, welche als Positionsreferenz dienen und/oder die Bestimmung erfolgt anhand fortlaufend aufgenommener Live-Bilder fortlaufend und/oder die Bestimmung erfolgt mittels Rückwärtsschnitt.

Alternativ oder zusätzlich ist bei Ausführungsformen mit einer Kamera das System dazu ausgebildet, automatisch anhand eines oder mehrerer aufgenommener Live-Bilder des Schneidguts mittels Bildverarbeitung eine Registrierung des jeweiligen zu schneidenden Schneidguts durchzuführen, insbesondere anhand eines Barcodes oder einer Seriennummer, durchzuführen. Somit kann das jeweilige Schneidgut vom System eingelesen werden. Zusätzlich oder alternativ erfolgt eine Erkennung der Schneidgutart und/oder des Schneidgutmaterials des zu schneidenden Schneidguts, insbesondere anhand einer Farbe, Struktur und/oder Oberflächenbeschaffenheit des Schneidguts. Als weitere Option erfolgt eine Bestimmung der Ist-Position des abgelegten Schneidguts auf dem Schneidtisch, welche zur Positionierung des Schneidwerkzeugs herangezogen wird. Dies ermöglicht vorteilhaft, dass die Ablage des Schneidguts auf dem Schneidtisch vergleichsweise ungenau bzw. mit grosser Toleranz erfolgen kann, was eine automatische oder manuelle Zuführung vereinfacht.

Zusätzlich oder alternativ kann anhand eines Kamera-Bildes eine Erkennung von Qualitätszonen des Schneidguts, also ein automatisches Bestimmen von Bereichen, welche einer bestimmten Materialgüte entsprechen, erfolgen. Alternativ können auch diesbezügliche Informationen als Annahmen schon gespeichert (also vordefiniert) vorliegen (z.B. liegen bei Lederhäuten üblicherweise jeweils an gleichen Stellen vglw. gute Qualitäten und an gleichen Stellen vglw. schlechte Qualitäten vor). Infolge kann dann anhand von so gewonnenen oder anhand von entsprechend Annahmen vordefinierten Qualitäts-Daten dem Benutzer anschliessend schneidgutbezogene Information angezeigt werden, welche spezifisch für das zu schneidende Schneidgut ist, also spezifisch für das jeweilige Exemplar, den Typ oder das Material oder der Qualität.

Als weitere Option ist das System ausgebildet zur Steuerung der Schneidevorrichtung durch den Benutzer mittels der Anzeigevorrichtung, vorzugsweise mittels Gestensteuerung bei Vorliegen einer Anzeigevorrichtung mit Kamera, oder auch mittels Bedienelementen, z.B. Tasten, auf der Anzeigevorrichtung.

In einigen Ausführungsformen umfasst der Schneidtisch ein Förderband und die Schneidevorrichtung weist einen Antrieb zum Antreiben des Förderbandes auf, mittels welchem das auf dem Schneidtisch aufliegende, zu schneidende Schneidgut in eine, insbesondere im Wesentlichen horizontale Richtung, auf der Schneidevorrichtung, insbesondere in und/oder aus dem Schneidbereich hinein bzw. heraus, transportierbar ist.

In weitergebildeten Ausführungsformen umfasst das System eine Sensoreinheit und das System, insbesondere die Recheneinheit, ist ausgebildet zur Berechnung einer Position und Ausrichtung der Anzeigevorrichtung relativ zur Schneidevorrichtung anhand von Messdaten der Sensoreinheit. Vorzugsweise weist die Sensoreinheit eine Inertialmesseinheit, insbesondere mit einem Beschleunigungssensor und/oder einem Gyroskop, und/oder einen Tiefensensor und/oder einen Distanzmesser und/oder ein GNSS-Empfänger und/oder einen Kompass auf.

Die vorliegende Erfindung betrifft ausserdem ein Verfahren zum Schneidbearbeiten von flächigem Schneidgut, insbesondere Papier-, Karton-, Wellpappe-, Folien-, Textil-, Kunststoff-, Schaumstoff- oder Holz-Platten oder -Bögen, mit einer Schneidevorrichtung, wobei die Schneidevorrichtung aufweist einen Schneidtisch zum Auflegen von zu schneidendem Schneidgut und ein Schneidwerkzeug, das oberhalb des Schneidtischs angeordnet ist, innerhalb eines Schneidbereichs parallel zum Schneidtisch verstellbar ist und mittels welchem ein auf dem Schneidtisch aufgelegtes, zu schneidendes Schneidgut in dem Schneidbereich schneidbearbeitbar ist. Im Rahmen des Verfahrens wird mittels eines Displays einer augmented-reality-Anzeigevorrichtung, vorzugsweise ausgebildet als Brille oder Head-up-Display, welche dazu ausgebildet ist, von einem Benutzer getragen zu werden, einem Benutzer vom Benutzer ablesbar im Sichtfeld des Benutzers, angepasst an die Position und Ausrichtung der Anzeigevorrichtung relativ zur Schneidevorrichtung und verknüpft mit einer Ist- und/oder Soll-Position des Schneidguts schneidgutbezogene Information angezeigt.

Die Erfindung betrifft weiter ein Computerprogrammprodukt mit Programmcode, der auf einem maschinenlesbaren Träger gespeichert ist, zur Steuerung bzw. Durchführung des erfindungsgemässen Verfahrens, insbesondere wenn das Programm auf einer als Steuereinheit eines erfindungsgemässen Systems ausgebildeten elektronischen Datenverarbeitungseinheit ausgeführt wird.

Die erfindungsgemässe Vorrichtung wird nachfolgend anhand von in den Zeichnungen schematisch dargestellten konkreten Ausführungsbeispielen rein beispielhaft näher beschrieben.

Im Einzelnen zeigen:
- Figur 1: eine Schrägansicht auf einer Schneidevorrichtung des Stands der Technik;
- Figur 2: eine schematische Schrägansicht eines erfindungsgemässen Systems;
- Figur 3a-c: Beispiele für ein Anzeigen von schneidgutbezogener Information im Zusammenhang mit einer Soll-Position des Schneidguts;
- Figur 4: ein weiteres Beispiel für ein Anzeigen von schneidgutbezogener Information;
- Figur 5: ein weiteres Beispiel für ein Anzeigen von schneidgutbezogener Information; und
- Figur 6: ein letztes Beispiel für ein Anzeigen von schneidgutbezogener Information.

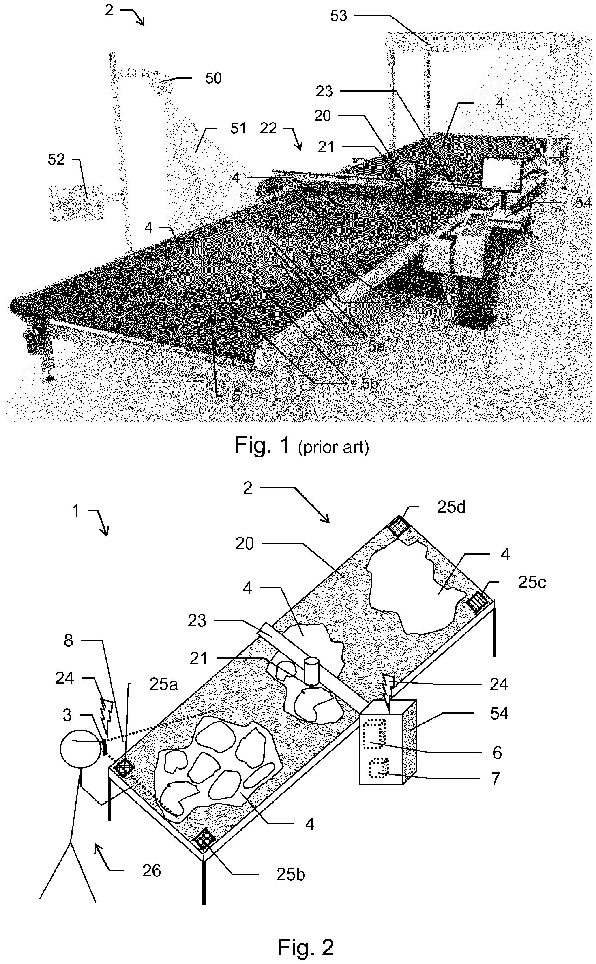

Die Figur 1 zeigt eine Schneidvorrichtung 2 des Stands der Technik zum Schneiden von flächigem Schneidgut, insbesondere Papier-, Karton-, Wellpappe-, Folien-, Textil-, Kunststoff-, Schaumstoff- oder Holz-Platten oder -Bögen, in einer Schrägansicht. Die Vorrichtung 2 gliedert sich in einen Schneidtisch 20, welcher im Beispiel ein Förderband aufweist und auf welchem im gezeigten Ausführungsbeispiel drei Lederhäute als Schneidgut 4 aufliegen, und in ein Schneidwerkzeug 21 auf einer Führungsschiene 23. Mittels einer Steuereinheit 54 können zumindest die Antriebe eines Schneidkopfes, auf welchem das Scheidwerkzeug 21 angeordnet ist, zum Verstellen des Schneidkopfes sowie ggf. ein Antrieb zum Antreiben des Förderbands angesteuert werden. Im Beispiel weist die Vorrichtung zudem ein Prüfmittel 53 auf, mit dem ein aufgelegtes zu schneidendes Schneidgut 4 optisch analysiert werden kann, zum Beispiel um verschiedene Qualitätszonen der Lederhaut festzustellen, welche dann gezielt für den Schneidevorgang berücksichtigt werden, indem eine hinsichtlich der vorhandenen Qualitätsbereiche optimierte Anordnung der zu schneidenden Schnittstücke auf der Lederhaut gewählt wird.

Das Schneidwerkzeug 21 ist oberhalb des Schneidtischs 20 und oberhalb des aufliegenden Schneidguts 4 angeordnet, und ist innerhalb eines Schneidbereichs 22 parallel zum Schneidtisch 21, also im Wesentlichen horizontal, entlang zweier zueinander senkrechter, horizontaler Achsen verstellbar. Vorzugsweise ist das Schneidwerkzeug 21 auch vertikal verstellbar, um es - gegebenenfalls mit unterschiedlichen Eingriffstiefen - in Eingriff mit dem Schneidgut 4 zu bringen. Mittels des Schneidwerkzeugs 21 kann auf dem Schneidtisch aufgelegtes, zu schneidendes Schneidgut 4 (im Bild die oben rechts liegende Lederhaut) in dem Schneidbereich 22 in einzelne Schnittstücke 5 geschnitten werden. Die Konturen der Schnittstücke 5 sind dabei in einem Speicher der Vorrichtung 2, z.B. als Teil der Steuereinheit 54, hinterlegt und bilden die Grundlage für einen Schnittplan. Die horizontale Bewegung des Schneidwerkzeugs 4 erfolgt dann abhängig vom Schnittplan, also Anordnung der Konturen auf dem jeweiligen Schneidgut 4. Wird das Schneidgut 4 auf dem Schneidtisch 20 platziert, nimmt es eine definierte Position und Ausrichtung relativ zum Schneidtisch 20 bzw. zur Schneidvorrichtung ein. Damit das Schneiden an den richtigen Stellen des Schneidguts 4 erfolgt, muss diese Platzierung entweder auf eine Soll-Position erfolgen oder die Ist-Position des Schneidguts 4 relativ zum Schneidtisch 20 muss vor dem Schneiden, z.B. durch optische Detektion, ermittelt werden. Mit anderen Worten muss für einen korrekten Schnitt die initiale Positionsbeziehung zwischen Schneidgut 4 und Schneidvorrichtung festgelegt werden.

Im vorderen Bereich der Figur ist ein Schneidgut 4 dargestellt, welches vollständig in einzelne Schnittstücke 5 geschnitten wurde, so dass die einzelnen Schnittstücke 5 bereit zum Entfernen vom Schneidtisch 20 sind, wobei im Beispiel dieses Absortieren händisch erfolgt. Entsprechend der oben beschriebenen Unterteilung des Schneidguts 4 in unterschiedliche Qualitätszonen liegen nach dem Schneiden Schnittstücke 5a-5c unterschiedlicher Qualität, und/oder z.B. auch unterschiedlicher Geometrie (wie identische Teile einmal für Schuhgrösse 38 und einmal für Schuhgrösse 39, die der Bediener ansonsten praktisch nicht unterscheiden kann), vor. Beispielsweise sind die Schnittstücke 5a Teile höchster Qualität, Schnittstücke 5b Teile mittlerer Qualität und Schnittstücke 5c solche geringster Qualität. Die Schneidvorrichtung weist im Beispiel einen Projektor 50 auf, der gezielt mittels Lichtstrahlen 51 verschiedener Farben die Schnittstücke 5 je nach Qualitätskategorie mit einer unterschiedlichen Farbe beleuchtet, so dass der Benutzer anhand der Beleuchtungsfarbe erkennen kann, zu welcher Kategorie das jeweilige Schnittstück gehört. In Figur 1 ist die Farbe umso heller je besser die Qualität ist. Da bei Vorrichtungen des Stands der Technik die Qualitätsanzeige-Projektion aus verschiedenen Gründen nicht immer für den Benutzer ausreichend erkenntlich ist, muss die Vorrichtung zusätzlich über einen Bildschirm 52 verfügen, der ein kategorisierendes Bild des geschnittenen Schneidguts 4 anzeigt. Allerdings ist für den Benutzer die Zuordnung eines jeweiligen Teils zu einer Kategorie anhand der Bildschirmanzeige im Vergleich zur Farbprojektion erschwert, da er erst das vorliegende Schneidgut 4 mit dem angezeigten Bild vergleichen und Zugehöriges identifizieren muss.

Figur 2 zeigt ein erfindungsgemässes System 1 zum Schneiden von flächigem Schneidgut 4. Das System 1 weist eine Schneidevorrichtung 2 mit einem, optional ein Förderband umfassenden, Schneidtisch 20, einer Steuereinheit 54 und einem Schneidwerkzeug 21 an einer Führungsleiste 23 auf, ähnlich derjenigen aus Figur 1. Zudem weist das System eine Anzeigevorrichtung 3 mit einem Display auf zur Darstellung von augmented-reality, im Beispiel ausgebildet als einer augmented-reality-Brille, welche vom Benutzer 26 auf dem Kopf getragen wird, so dass das Display bzw. die Anzeigevorrichtung 3 im Sichtfeld 8 des Benutzers 26 positioniert ist. Alternativ ist das Display ausgebildet als Head-up-Display. Der Vorteil solcher Ausgestaltungen der Anzeigevorrichtung 3 ist, dass der Benutzer 26 auch beim Tragen der Anzeigevorrichtung 3 beide Hände frei hat. Optional weist die Anzeigevorrichtung 3 einen eye-tracker auf, mit dem die Blickrichtung des Benutzers 26 bestimmt wird, wodurch ggf. Informationen angepasst an die Blickrichtung dargestellt werden.

Das Display dient dazu, in an sich bekannter Weise dem Benutzer in seinem Sichtfeld 8 ablesbar Information darzustellen, welche seiner Ansicht von der Umgebung, in diesem Fall speziell seiner Ansicht von der Schneidevorrichtung 2 und/oder dem Schneidgut 4, überlagert wird. Erfindungsgemäss handelt es sich bei der Information um schneidgutbezogene Information, beispielsweise Information über eine Ist- oder Soll-Position des Schneidguts oder Teilen davon oder über Schnittkonturen. Die Information wird fortlaufend oder gezielt bei Bedarf mittels einer Datenverbindung 24, z.B. einer Funkverbindung, aus einem Speicher 6, der im Beispiel in der Steuereinheit 54 untergebracht ist, von der Anzeigevorrichtung 3 abgerufen.

Die Anzeige der schneidgutrelevanten Information erfolgt dabei erfindungsgemäss abhängig von bzw. angepasst an die Position und Ausrichtung der Anzeigevorrichtung 3 relativ zur Schneidevorrichtung 2 bzw. relativ zum Schneidetisch 20, beispielsweise derart angepasst, dass Information nur dann angezeigt wird, wenn die Schneidvorrichtung 2 oder der Schneidtisch 20 im Sichtfeld 8 liegt oder die Positionierung der Information auf dem Display abhängig von der Relativposition bzw. Relativausrichtung der Anzeigevorrichtung 3 ist und z.B. sich die Positionierung fortlaufend daran anpasst. Hierzu weist das System eine Recheneinheit 7, die im Beispiel in der Steuereinheit 54 untergebracht ist, auf zur Berechnung ebendieser Position und Ausrichtung. Vorzugsweise weist die Anzeigevorrichtung 3 eine Kamera auf zur Aufnahme eines Live-Bildes. Die Berechnung der Position erfolgt dann mittels in an sich bekannter Weise mittels Bildverarbeitung des aufgenommenen Live-Bildes, aus welchem markante und spezifische Merkmale des Schneidtischs extrahierbar sind und anhand derer z.B. mittels Rückwärtsschnitt die Position und Ausrichtung der Kamera und damit der Anzeigevorrichtung 3 berechnet wird. Hierzu kann wie im Beispiel dargestellt die Schneidvorrichtung 2 spezielle optische Markierungen 25a-25d aufweisen, deren Lage und/oder Anordnung bekannt und im Speicher 6 hinterlegt ist und die somit als Positionsreferenz dienen. Alternativ oder zusätzlich zu einer merkmalsbasierten Bestimmung der relativen Position und Ausrichtung kann das System 2 hierfür auch weitere Sensoren aufweisen, welche in der Anzeigevorrichtung 3 angeordnet sein können, z.B. eine Intertialmesseinheit (IMU bzw. INS als Abkürzung für Inertial Navigation System), Kompass, Neigungssensoren, einen Tiefensensor wie eine RIM-Kamera oder Streifenprojektionskamera, etc. Im Allgemeinen können auch weitere dem Fachmann für die Indoornavigation normalerweise bekannte Methoden hier Anwendung finden, wie WLAN-, RFID- und/oder Bluetooth-basierte Ortung, etc.

Die Anzeige der schneidgutbezogenen Information erfolgt zudem verknüpft mit einer Position des Schneidguts 4. Im Beispiel liegt das bereits geschnittene Schneidgut 4 im Sichtfeld 8 des Benutzers 26 und das Display stellt die Information in Relation zur Lage dieses Schneidguts 4 dar, z.B. indem ein grafisches Symbol nicht an einer beliebigen oder fixen Stelle auf dem Display und damit im Sichtfeld 8 des Benutzers 26 angezeigt wird, sondern so, dass es an einer bestimmten Stelle das Schneidgut überlagernd vom Benutzer abgelesen werden kann. Die Ist-Position des Schneidguts 4 wird dabei durch Bildverarbeitung eines aufgenommenen Live-Bildes ermittelt oder ausgehend von einer vorbekannten Lage des Schneidguts 4 auf dem Schneidtisch anhand der berechneten Position und Ausrichtung der Anzeigevorrichtung 3 relativ zum Schneidtisch 20.

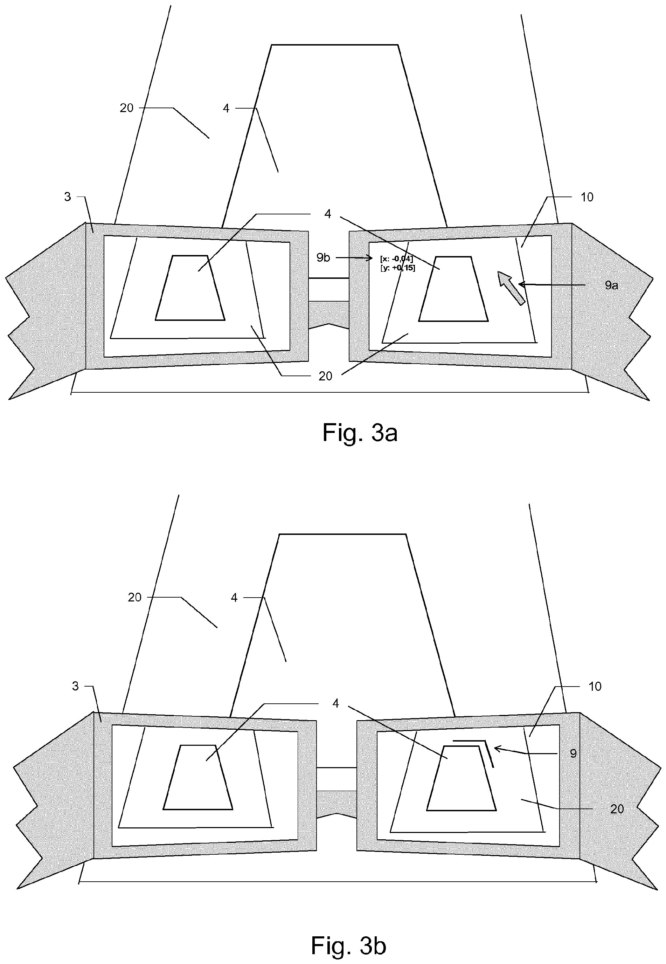

Figur 3a zeigt ein erstes Beispiel für das Anzeigen von schneidgutrelevanter Information. Dargestellt ist die Sicht des Benutzers durch die als augmented-reality Brille ausgebildete Anzeigevorrichtung 3 auf einen Teil des Schneidtischs 20, auf dem das zu schneidende Schneidgut 4 positioniert werden soll, welches der Benutzer ebenfalls durch die Gläser der Brille betrachtet. Zusätzlich zu dieser Sicht seiner im Sichtfeld liegenden Umgebung sieht der Benutzer mittels des als Display 10 dienenden Brillenglas eine Darstellung von schneidgutbezogener Information 9, die von der Anzeigevorrichtung 3 so dargestellt wird, dass der Benutzer sie scharf sehen und damit ablesen kann (z.B. mittels eines kleinen Projektors als Teil der Anzeigevorrichtung, der die Information 9 auf das Glas projiziert) .

Im Beispiel ist die schneidgutbezogene Information 9 bezogen auf eine Soll-Position des Schneidguts 4, die es für den anschliessenden Schneidvorgang einnehmen soll. Die Anzeige der schneidgutbezogenen Information erfolgt verknüpft mit der Ist-Position des Schneidguts 4. Diese Ist-Position weicht bezogen auf ein z.B. auf den Schneidtisch 20 ausgerichtetes Koordinatensystem in x-Richtung um -0,04 Einheiten und in y-Richtung um +0,15 Einheiten von der Soll-Position ab, was dem Benutzer als Textinformation 9b im Display oben links angezeigt wird. Zusätzlich wird als grafische schneidgutbezogene Information 9a ein Pfeil dargestellt, der anzeigt, in welche Richtung er das Schneidgut händisch verschieben muss, damit es die Soll-Position erreicht. Eine solche Grafik ist optional zusätzlich animiert. Die Textinformation 9b und der Pfeil 9a werden im Beispiel fortlaufend abhängig von der ermittelten Abweichung von der Ist-Position zur Soll-Position angepasst, der Pfeil 9a beispielsweise durch Ändern seiner Richtung und Länge.

Figur 3b ist eine Variation der Figur 3a. Hier wird die Soll-Position als schneidgutbezogene Information 9a grafisch als zwei Linien dargestellt, die die einzunehmende Soll-Position kennzeichnen. Dabei wird im Beispiel die Lage dieser Linien 9 relativ zum gesehenen Bild 20 des Schneidtisch 20 fix gehalten, wozu sich die Lage der Linien 9a auf dem Display 10 ggf. ändert, abhängig davon, ob sich die Blickrichtung des Benutzers und/oder die Ausrichtung der Anzeigevorrichtung 3 relativ zum Schneidtisch 20 ändert. Blickt der Benutzer z.B. weiter nach vorne, wandert die schneidgutbezogene Information 9, die verknüpft mit der Soll-Position des Schneidguts 4 ist, im Display weiter nach unten.

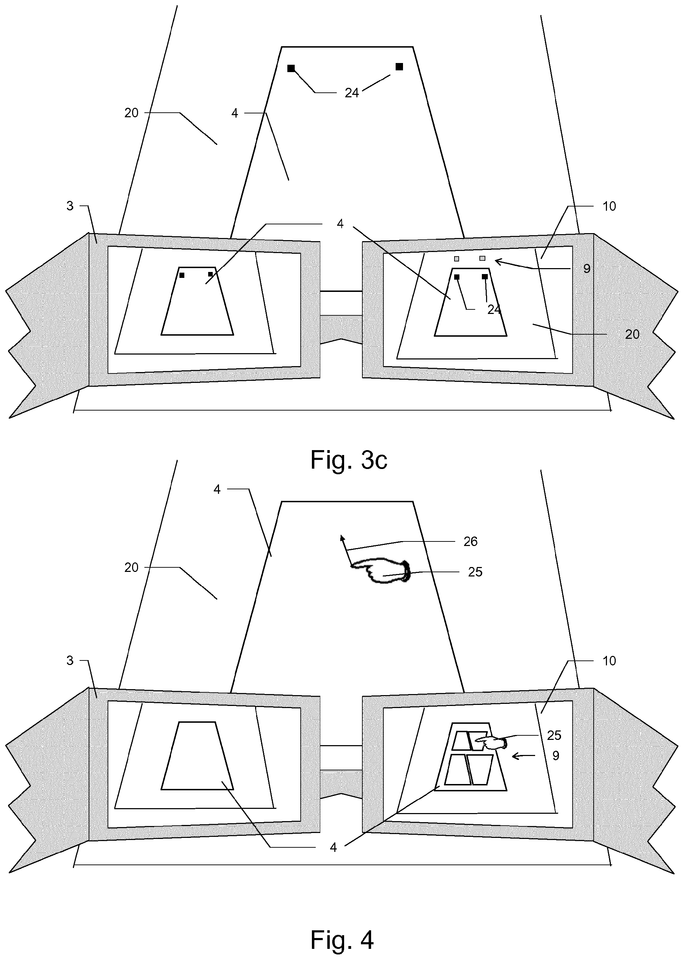

Figur 3c ist eine weitere Variation der Figur 3a. In diesem Beispiel ist das Schneidgut 4 z.B. ein bedruckter Bogen Papier, das einen auszuschneidenden Druck aufweist (nicht dargestellt) und mit Registriermarken 24 versehen ist, welche in bekannter Weise einem passgenauen Schnitt dienen. Für ein manuelles oder auch maschinelles Ablegen auf dem Schneidtisch 20 werden diese Registriermarken 24 als Positionierungshilfe verwendet, indem der Bogen 4 derart abgelegt oder verschoben wird, dass sich die Registriermarken 24 mit grafischen Markierungen 9 decken, welche im Display 10 als und verknüpft mit der Soll-Position angezeigt werden. Die Darstellung der schneidgutbezogenen Information 9 kann als Kontrollmittel dienen, um die korrekte Position des Schneidguts 4 zu überprüfen und/oder als Benutzerführung bei einem händischen Ablegen des Schneidguts 4.

Figur 4 zeigt ein weiteres Beispiel für das Anzeigen von schneidgutrelevanter Information. Dargestellt sind in der Figur wiederum ein Ausschnitt des Schneidtischs 20 mit aufgelegtem Schneidgut 4 und die Sicht des Benutzers darauf durch die Anzeigevorrichtung 3. Im Display 10 wird augmented reality dadurch erzeugt, dass dem Schneidgut 4 überlagernd zu schneidende Konturen 9 angezeigt werden, welche von der Steuereinheit für dieses Gut 4 ausgewählt worden sind. Der Benutzer kann so kontrollieren, ob die gewählten Schnittkonturen sachgemäss sind, z.B. optimal an das Schneidgut 4 angepasst sind. Ggf. kann der Benutzer die Positionierung des Schneidguts 4 hinsichtlich der Konturen optimieren.

Figur 4 zeigt weiter, wie alternativ oder zusätzlich das erfindungsgemässe System dem Benutzer ermöglicht, per Gestensteuerung die zu schneidenden Konturen optimiert auf dem Schneidgut 4 anzuordnen. Beispielsweise erfolgt mittels Bildverarbeitung von Live-Bildern einer Kamera (nicht dargestellt) der Anzeigevorrichtung 3 eine Erkennung der Bewegungen der Hand 25 des Benutzers, welche er auf dem Schneidgut 4 ausführt (z.B. eine Schieb- oder Ziehbewegung mit dem Zeigefinger, symbolisiert durch den Pfeil 26) und womit er virtuell die ihm dargestellten Schnittkonturen 9 verschiebt und/oder verändert, so dass eine neue virtuelle Anordnung der Schnittkonturen 9 entsteht, welche von der Steuereinheit registriert und als neues Schnittmuster abgespeichert, anhand dessen anschliessend das Schneiden erfolgt.

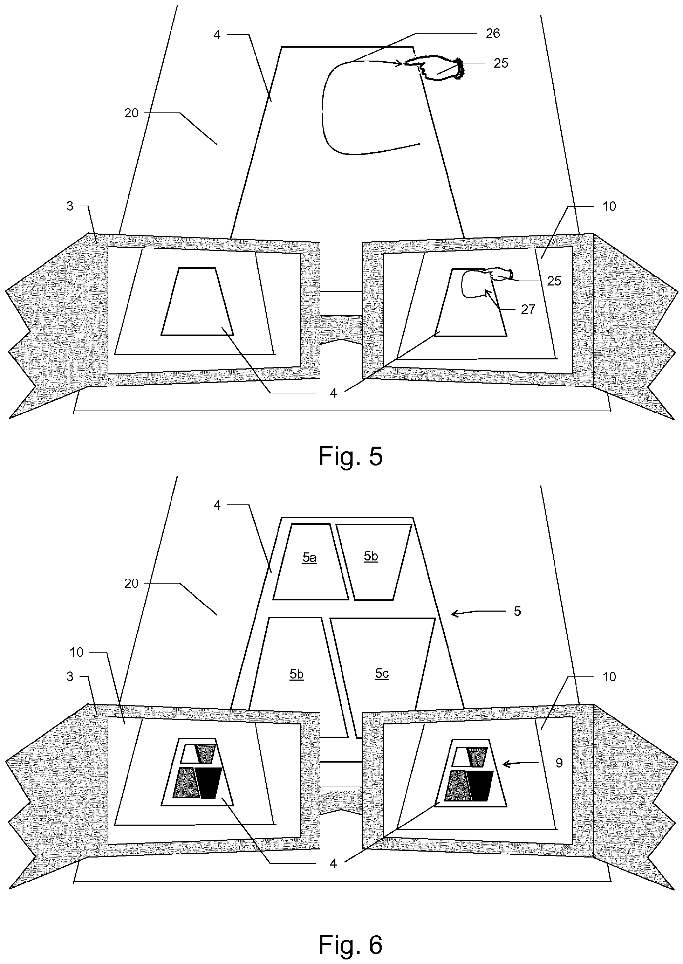

Figur 5 zeigt eine weitere Form der Steuerung der Schneidevorrichtung durch den Benutzer mittels der Anzeigevorrichtung 3. Diese weist eine Kamera (nicht dargestellt) zur fortlaufenden Aufnahme von Live-Bildern auf. Wie im Beispiel nach Figur 4 erfolgt mittels Bildverarbeitung einer Erkennung der Handbewegungen 26 der Benutzerhand 25. Im vorliegenden Beispiel werden diese dazu verwendet, um Bereiche des Schnittguts 4 zu definieren. Im Beispiel hat der Benutzer durch die Handbewegung einen ersten Bereich 27 definiert, der in der Steuereinheit abgespeichert wird. Beispielsweise lassen sich so auf einfache Weise vom Benutzer Zonen unterschiedlicher Qualität des zu schneidenden Materials dem System oder auszusparende Fehlerbereiche mitteilen, wodurch anschliessend automatisch ein den Qualitätszonen bzw. Fehlerbereichen angepasster Schneidevorgang erfolgen kann.

Alternativ oder zusätzlich erfolgt eine Definition von Qualitäts- oder Fehlerbereichen anhand eines von der Anzeigevorrichtung 3 aufgenommenen Live-Bilds mittels entsprechender Algorithmen, die das System aufweist, automatisch. Als weitere Optionen wird ein Live-Bild dazu benutzt, um automatisch eine Registrierung oder Erkennung des Schneidguts 4 oder des Schneidguttyps durchzuführen, z.B. mittels eines auf dem Schneidgut 4 aufgedruckten Barcodes oder Seriennummer oder anhand einer Beschaffenheit des Schneidguts 4, z.B. seiner Farbe, Struktur oder Form, oder einer Oberflächenbeschaffenheit. Optional erfolgt im Anschluss an das Registrieren oder Erkennen das Anzeigen von schneidgutbezogener Information zumindest teilweise spezifisch auf das registrierte oder erkannte Schneidgut 4, beispielsweise indem dem Benutzer Informationen zum optimalen händischen Umgang mit dem Schneidgut 4 angezeigt wird oder Information betreffend eines für dieses Schneidgut 4 auszuwählenden Schneidwerkzeugs.

Figur 6 zeigt ein weiteres Beispiel für das Anzeigen von schneidgutrelevanter Information. Dargestellt sind ein Ausschnitt des Schneidtischs 20, auf dem ein bereits in Teile 5 geschnittenes Schneidgut 4 aufliegt und die Sicht des Benutzers darauf durch die Anzeigevorrichtung 3. In diesem Beispiel dienen beide Gläser der Brille als Display 10. Das Schneidgut 4 weist Teile 5 unterschiedlicher Kategorie 5a-5c auf. Kategorien können beispielsweise hinsichtlich Qualität, Bauteilgruppe oder dgl. Definiert sein. Z.B. ist bei natürlichen Materialien wie Leder als Schneidgut 4 oftmals die Qualität nicht über die gesamte Fläche konstant, sondern weist das Schneidgut 4 unterschiedliche Qualitätszonen auf, womit sich auch unterschiedliche Qualitäten seitens der Schnittteile 5 ergeben. Um die jeweilige Kategorie 5a-5c dem Benutzer anzuzeigen, werden im Display 10 die jeweiligen Schnittteile je nach Kategoriezugehörigkeit mit einer grafischen Kennzeichnung 9, im Beispiel mit unterschiedlichen Farben, passgenau und formtreu überlegt. Somit vermag der Benutzer dank dieser Art von Benutzerführung unmittelbar durch Blick auf das Schnittgut 4 anhand der Farbgebung als augmented reality ein jeweilige Schnittteil der richtigen Kategorie zuzuordnen (z.B. weiss für Kategorie 5a, grau für 5b und schwarz für 5c), was besonders für ein händisches Absortieren in Behälter der jeweiligen Kategorie vorteilhaft ist. Vorteilhaft ist weiter, dass dies erreicht wird, ohne auf einen externen Projektor wie im Stand der Technik (vgl. Fig. 1) zurückgreifen zu müssen.

Die überlagernde Darstellung der kennzeichnenden Grafik 9 erfolgt vorteilhaft derart angepasst an die bzw. verknüpft mit der Position und Ausrichtung der Anzeigevorrichtung 3 an den Schneidtisch 20 und an die Position des Schneidguts 4, dass der formtreue und passgenaue Overlay auch bei einer Änderung der Kopfhaltung oder Blickrichtung des Benutzers, also einer Änderung der relativen Position und Ausrichtung der Brille 3, fortlaufend beibehalten wird, indem dynamisch die Darstellung der Grafik 9 angepasst wird (Anpassung der Grösse und/oder Positionierung der Grafik 9 auf dem Bildschirm 10).

## Patentansprüche

1. System aus einer elektronischen mobilen Anzeigevorrichtung mit einem Display zur Darstellung von augmented-reality, einem elektronischen Speicher und einer Schneidevorrichtung zum Schneiden von Schneidgut, insbesondere im Wesentlichen flächigem Schneidgut wie Papier-, Karton-, Wellpappe-, Folien-, Leder-, Textil-, Kunststoff-, Schaumstoff- oder Holz-Platten bzw. -Bögen, wobei
• die Schneidevorrichtung aufweist
∘ einen Schneidtisch zum Auflegen von zu schneidendem Schneidgut und
∘ ein Schneidwerkzeug, das oberhalb des Schneidtischs angeordnet ist, innerhalb eines Schneidbereichs parallel zum Schneidtisch verstellbar ist und mittels welchem ein auf dem Schneidtisch aufgelegtes, zu schneidendes Schneidgut in dem Schneidbereich schneidbearbeitbar ist,
• der Speicher ausgebildet ist zur Speicherung schneidgutbezogener Information, welche mittels einer Datenverbindung von der Anzeigevorrichtung abrufbar ist,
• das System eine Recheneinheit aufweist zur Berechnung einer Position und Ausrichtung der Anzeigevorrichtung relativ zur Schneidevorrichtung, insbesondere relativ zum Schneidtisch,
• die Anzeigevorrichtung ausgebildet ist zum Tragen durch einen Benutzer und Positionierung im Sichtfeld des Benutzers,
wodurch das System ausgebildet ist, dem Benutzer abgerufene schneidgutbezogene Information mittels des Displays
• vom Benutzer ablesbar im Sichtfeld des Benutzers,
• angepasst an die Position und Ausrichtung der Anzeigevorrichtung relativ zur Schneidevorrichtung und
• verknüpft mit einer Ist- und/oder Soll-Position des Schneidguts
anzuzeigen.

2. System nach Anspruch 1,
**dadurch gekennzeichnet, dass**
die Anzeigevorrichtung ausgebildet ist als augmented-reality-Brille oder Kopfbedeckung, insbesondere Helm, mit Head-up-Display.

3. System nach einem der vorherigen Ansprüche,
**dadurch gekennzeichnet, dass**
die schneidgutbezogene Information bezogen ist auf
• eine oder mehrere zu schneidende Konturen und/oder
• eine oder mehrere Kennzeichnungen des Schneidguts, und/oder
• eine oder mehrere Registriermarken zur Positionierung des Schneidwerkzeugs und/oder
• eine oder mehrere Ist- oder Soll-Positionen und/oder Ist- oder Soll-Ausrichtungen des Schneidguts oder von Teilen davon, insbesondere zwecks händischen Platzierens des Schneidguts auf dem Schneidtisch vor dem Schneiden durch den Benutzer, und/oder
• eine Kategorisierung von geschnittenen Teilen, insbesondere zwecks händischer Absortierung, und/oder
• Qualitätszonen des Schneidguts.

4. System nach einem der vorherigen Ansprüche,
**dadurch gekennzeichnet, dass**
das System ausgebildet ist zur Darstellung wenigstens eines Teils der schneidgutbezogenen Informationen als Grafik, insbesondere wobei die Grafik das Schneidgut wenigstens teilweise positionsspezifisch überlagernd darstellbar ist.

5. System nach auf Anspruch 3 rückbezogenen Anspruch 4,
**dadurch gekennzeichnet, dass**
das System ausgebildet ist zur grafischen Kennzeichnung von
• Qualitätszonen, insbesondere mittels Grafiken mit unterschiedlicher Farbe oder Muster und/oder
• zu schneidenden Konturen, insbesondere mittels Linien, und/oder
• Absortierungskategorien, insbesondere mittels unterschiedlichen Farben und/oder unterschiedlichem Text und/oder unterschiedlichen Symbolen.

6. System nach Anspruch 5,
**dadurch gekennzeichnet, dass**
das System derart ausgebildet ist, dass die Darstellung der grafischen Kennzeichnung derart angepasst an die Position und Ausrichtung der Anzeigevorrichtung relativ zur Schneidevorrichtung erfolgt, dass im Sichtfeld des Benutzers die grafische Kennzeichnung den jeweiligen Bereich des Schneidguts passgenau und formtreu überlagernd dargestellt wird, insbesondere auch fortlaufend bei etwaiger Änderung der Position und Ausrichtung der Anzeigevorrichtung relativ zur Schneidevorrichtung.

7. System nach einem der vorherigen Ansprüche,
**dadurch gekennzeichnet, dass**
das System ausgebildet ist zur Benutzerführung mittels des Displays anhand der schneidgutbezogenen Informationen, insbesondere zur Führung des Benutzers beim Platzieren eines Schneidguts auf dem Schneidtisch und/oder Absortieren geschnittener Teile, insbesondere wobei die Benutzerführung mittels grafischer Symbole erfolgt.

8. System nach einem der vorherigen Ansprüche,
**dadurch gekennzeichnet, dass**
das System eine Kamera aufweist zur Aufnahme von Bildern, insbesondere Live-Bildern,
wobei die Kamera an der Anzeigevorrichtung oder in einem fixen räumlichen Verhältnis gegenüber der Schneidevorrichtung angeordnet ist.

9. System nach Anspruch 8,
**dadurch gekennzeichnet, dass**
die Recheneinheit ausgebildet ist zur Bestimmung von Position und Ausrichtung der Anzeigevorrichtung relativ zur Schneidevorrichtung anhand wenigstens eines von der Kamera aufgenommenen Bildes wenigstens eines als Positionsreferenz dienenden Teils der Schneidevorrichtung und/oder der Anzeigevorrichtung, insbesondere wobei, für den Fall dass die Kamera an der Anzeigevorrichtung angeordnet ist,
• die Schneidevorrichtung speziell hierzu optische Markierungen aufweist, welche als Positionsreferenz dienen und/oder
• die Bestimmung anhand fortlaufend aufgenommener Bilder fortlaufend erfolgt und/oder
• die Bestimmung mittels Rückwärtsschnitt erfolgt.

10. System nach Anspruch 8 oder 9,
**dadurch gekennzeichnet, dass**
das System ausgebildet ist automatisch anhand eines oder mehrerer aufgenommener Bilder des Schneidguts mittels Bildverarbeitung
• eine Registrierung des jeweiligen zu schneidenden Schneidguts durchzuführen, insbesondere anhand eines Barcodes oder einer Seriennummer, und/oder
• eine Erkennung der Schneidgutart und/oder des Schneidgutmaterials des zu schneidenden Schneidguts durchzuführen, insbesondere anhand einer Farbe, Struktur und/oder Oberflächenbeschaffenheit des Schneidguts, und/oder
• eine Bestimmung der Ist-Position des abgelegten Schneidguts auf dem Schneidtisch, welche zur Positionierung des Schneidwerkzeugs herangezogen wird, und/oder
• eine Erkennung von Qualitätszonen des Schneidguts durchzuführen, insbesondere wobei anhand der dadurch gewonnenen Daten dem Benutzer anschliessend schneidgutbezogene Information angezeigt wird, welche spezifisch für das zu schneidende Schneidgut ist.

11. System nach einem der vorherigen Ansprüche,
**dadurch gekennzeichnet, dass**
das System eine Sensoreinheit umfasst und das System ausgebildet ist zur Berechnung einer Position und Ausrichtung der Anzeigevorrichtung relativ zur Schneidevorrichtung anhand von Messdaten der Sensoreinheit, insbesondere wobei die Sensoreinheit aufweist
• eine Inertialmesseinheit, insbesondere mit einem Beschleunigungssensor und/oder einem Gyroskop, und/oder
• einen Tiefensensor und/oder
• einen Distanzmesser und/oder
• einen Kompass.

12. System nach einem der vorherigen Ansprüche,
**dadurch gekennzeichnet, dass**
das System ausgebildet ist zur Steuerung der Schneidevorrichtung durch den Benutzer mittels der Anzeigevorrichtung, insbesondere mittel Gestensteuerung bei Vorliegen einer Anzeigevorrichtung mit Kamera.

13. System nach einem der vorherigen Ansprüche,
**dadurch gekennzeichnet, dass**
der Schneidtisch ein Förderband umfasst und die Schneidevorrichtung einen Antrieb zum Antreiben des Förderbandes aufweist, mittels welchem das auf dem Schneidtisch aufliegende, zu schneidende Schneidgut in eine, insbesondere im Wesentlichen horizontale Richtung, auf der Schneidevorrichtung, insbesondere in und/oder aus dem Schneidbereich hinein bzw. heraus, transportierbar ist.

14. Verfahren zum Schneidbearbeiten von Schneidgut, insbesondere im Wesentlichen flächigem Schneidgut wie Papier-, Karton-, Wellpappe-, Folien-, Leder-, Textil-, Kunststoff-, Schaumstoff- oder Holz-Platten bzw. -Bögen, mit einer Schneidevorrichtung, wobei die Schneidevorrichtung aufweist
• einen Schneidtisch zum Auflegen von zu schneidendem Schneidgut und
• ein Schneidwerkzeug, das oberhalb des Schneidtischs angeordnet ist, innerhalb eines Schneidbereichs parallel zum Schneidtisch verstellbar ist und mittels welchem ein auf dem Schneidtisch aufgelegtes, zu schneidendes Schneidgut in dem Schneidbereich schneidbearbeitbar ist,
wobei im Rahmen des Verfahrens mittels eines Displays einer augmented-reality-Anzeigevorrichtung, welche dazu ausgebildet ist, von einem Benutzer getragen zu werden, einem Benutzer
• vom Benutzer ablesbar im Sichtfeld des Benutzers,
• angepasst an die Position und Ausrichtung der Anzeigevorrichtung relativ zur Schneidevorrichtung und
• verknüpft mit einer Ist- und/oder Soll-Position des Schneidguts
schneidgutbezogene Information angezeigt wird.

15. Computerprogrammprodukt mit Programmcode, der auf einem maschinenlesbaren Träger gespeichert ist, zur Steuerung bzw. Durchführung des Verfahrens nach Anspruch 14, insbesondere wenn das Programm auf einer als Steuereinheit eines Systems nach einem der Ansprüche 1 bis 13 ausgebildeten elektronischen Datenverarbeitungseinheit ausgeführt wird.

## Claims

1. System consisting of an electronic mobile display device having a display for displaying augmented reality, an electronic memory, and a cutting device for the cutting of cutting stock, in particular substantially planar cutting stock such as panels or sheets made of paper, paperboard, corrugated cardboard, film, leather, textile, plastic, foam or wood, wherein
• the cutting device has
∘ a cutting table for depositing cutting stock that is to be cut, and
∘ a cutting tool which is arranged above the cutting table, is movable parallel to the cutting table within a cutting region, and by means of which a cutting stock that is to be cut, which is deposited on the cutting table, can be cut in the cutting region,
• the memory is designed to store information relating to the cutting stock, which information can be retrieved by the display device by means of a data connection,
• the system has a computing unit for calculating a position and orientation of the display device relative to the cutting device, in particular relative to the cutting table,
• the display device is designed to be worn by a user and positioned in the field of vision of the user,
as a result of which the system is designed to display to the user, by means of the display, retrieved information relating to the cutting stock
• in a manner readable by the user in the field of vision of the user,
• in a manner adapted to the position and orientation of the display device relative to the cutting device, and
• in a manner linked to an actual and/or setpoint position of the cutting stock.

2. System according to claim 1, **characterized in that** the display device is designed as augmented reality glasses or headgear, in particular a helmet, with a head-up display.

3. System according to one of the preceding claims, **characterized in that** the information relating to the cutting stock relates to
• one or more contours to be cut, and/or
• one or more identifiers of the cutting stock, and/or
• one or more registration marks for positioning the cutting tool, and/or
• one or more actual or setpoint positions and/or actual or setpoint orientations of the cutting stock or of parts thereof, in particular for the purpose of manual placement of the cutting stock on the cutting table prior to the cutting by the user, and/or
• a categorization of cut parts, in particular for the purpose of manual sorting, and/or
• quality zones of the cutting stock.

4. System according to one of the preceding claims, **characterized in that** the system is designed to display at least some of the information relating to the cutting stock as a graphic, in particular wherein the graphic can be displayed at least partially overlaid on the cutting stock in a position-specific manner.

5. System according to claim 4 when referring back to claim 3, **characterized in that** the system is designed for the graphical identification of
• quality zones, in particular by means of graphics having different colours or patterns, and/or
• contours to be cut, in particular by means of lines, and/or
• sorting categories, in particular by means of different colours and/or different text and/or different symbols.

6. System according to claim 5, **characterized in that** the system is designed such that the graphical identification is displayed in a manner adapted to the position and orientation of the display device relative to the cutting device such that, in the field of vision of the user, the graphical identification is displayed overlaid on the respective region of the cutting stock in a precise and geometrically accurate manner, in particular also continuously in the event of any change in position and orientation of the display device relative to the cutting device.

7. System according to one of the preceding claims, **characterized in that** the system is designed to guide the user by means of the display on the basis of the information relating to the cutting stock, in particular to guide the user when placing a cutting stock on the cutting table and/or when sorting cut parts, in particular wherein the user is guided by means of graphic symbols.

8. System according to one of the preceding claims, **characterized in that** the system has a camera for capturing images, in particular live images, wherein the camera is arranged on the display device or in a fixed spatial relationship relative to the cutting device.

9. System according to claim 8, **characterized in that** the computing unit is designed to determine the position and orientation of the display device relative to the cutting device on the basis of at least one image, captured by the camera, of at least one part of the cutting device and/or display device that serves as a position reference, in particular wherein, for the case where the camera is arranged on the display device,
• the cutting device has optical markings especially for this purpose, which serve as a position reference, and/or
• the determination takes place continuously on the basis of continuously captured images, and/or
• the determination takes place by means of resection.

10. System according to claim 8 or 9, **characterized in that** the system is designed to carry out the following automatically on the basis of one or more captured images of the cutting stock, by means of image processing,
• registration of the respective cutting stock that is to be cut, in particular on the basis of a barcode or a serial number, and/or
• detection of the type of cutting stock and/or the material of the cutting stock, in particular on the basis of a colour, structure and/or surface finish of the cutting stock, and/or
• determination of the actual position of the deposited cutting stock on the cutting table, which is used to position the cutting tool, and/or
• detection of quality zones of the cutting stock,
in particular wherein information relating to the cutting stock is then displayed to the user on the basis of the data obtained, said information being specific to the cutting stock that is to be cut.

11. System according to one of the preceding claims, **characterized in that** the system comprises a sensor unit and the system is designed to calculate a position and orientation of the display device relative to the cutting device on the basis of measurement data from the sensor unit, in particular wherein the sensor unit has
• an inertial measurement unit, in particular having an acceleration sensor and/or a gyroscope, and/or
• a depth sensor, and/or
• a distance measuring means, and/or
• a compass.

12. System according to one of the preceding claims, **characterized in that** the system is designed for the user to control the cutting device by means of the display device, in particular by means of gesture control if a display device having a camera is provided.

13. System according to one of the preceding claims, **characterized in that** the cutting table comprises a conveyor belt and the cutting device has a drive for driving the conveyor belt, by means of which the cutting stock that is to be cut, which rests on the cutting table, can be transported in an in particular substantially horizontal direction on the cutting device, in particular into and/or out of the cutting region.

14. Method for the cutting of cutting stock, in particular substantially planar cutting stock such as panels or sheets made of paper, paperboard, corrugated cardboard, film, leather, textile, plastic, foam or wood, using a cutting device, wherein the cutting device has
• a cutting table for depositing cutting stock that is to be cut, and
• a cutting tool which is arranged above the cutting table, is movable parallel to the cutting table within a cutting region, and by means of which a cutting stock that is to be cut, which is deposited on the cutting table, can be cut in the cutting region,
wherein, in the context of the method, by means of a display of an augmented reality display device which is designed to be worn by a user, information relating to the cutting stock is displayed to a user
• in a manner readable by the user in the field of vision of the user,
• in a manner adapted to the position and orientation of the display device relative to the cutting device, and
• in a manner linked to an actual and/or setpoint position of the cutting stock.

15. Computer program product comprising program code which is stored on a machine-readable carrier, for controlling and/or carrying out the method according to claim 14, in particular when the program is executed on an electronic data processing unit designed as a control unit of a system according to one of claims 1 to 13.

## Revendications

1. Système composé d'un dispositif d'affichage électronique mobile avec un écran pour l'affichage de réalité augmentée, une mémoire électronique et un dispositif de coupe pour la découpe de matière à découper, en particulier de matière à découper sensiblement plate comme des panneaux ou feuilles de papier, de carton, de carton ondulé, de film, de cuir, de textile, de plastique, de mousse ou de bois, dans lequel
• le dispositif de coupe présente
∘ une table de coupe pour la dépose de matière à découper et
∘ un outil de coupe disposé au-dessus de la table de coupe, qui est ajustable dans une zone de coupe parallèle à la table de coupe et au moyen duquel une matière à découper posée sur la table de coupe peut être découpée dans la zone de coupe,
• la mémoire est conçue pour enregistrer des informations concernant la matière à découper, qui peuvent être appelées par le dispositif d'affichage au moyen d'une connexion de données,
• le système comprend une unité de calcul pour calculer une position et une orientation du dispositif d'affichage par rapport au dispositif de coupe, en particulier par rapport à la table de coupe,
• le dispositif d'affichage est conçu pour être porté par un utilisateur et positionné dans le champ de vision de l'utilisateur,
de sorte que le système est conçu pour afficher des informations sur la matière à découper appelées par l'utilisateur au moyen de l'écran
• de façon lisible par l'utilisateur dans son champ de vision,
• de façon adaptée à la position et à l'orientation du dispositif d'affichage par rapport au dispositif de coupe et
• en les associant à une position réelle et/ou de consigne de la matière à découper.

2. Système selon la revendication 1, **caractérisé en ce que** le dispositif d'affichage est conçu comme des lunettes de réalité augmentée ou un dispositif porté sur la tête, en particulier un casque, avec affichage tête haute.

3. Système selon l'une des revendications précédentes, **caractérisé en ce que** les informations sur la matière à découper se rapportent à
• un ou plusieurs contours à découper et/ou
• un ou plusieurs marquages de la matière à découper et/ou
• un ou plusieurs repères d'alignement pour le positionnement de l'outil de coupe et/ou
• une ou plusieurs positions réelles ou nominales et/ou orientations réelles ou nominales de la matière à découper ou de parties de celle-ci, en particulier dans le but du placement manuel de la matière à découper sur la table de coupe avant sa découpe par l'utilisateur et/ou
• une catégorisation de pièces coupées, en particulier aux fins d'un tri manuel, et/ou
• des zones de qualité de la matière à découper.

4. Système selon l'une des revendications précédentes, **caractérisé en ce que** le système est conçu pour visualiser au moins une partie des informations concernant la matière à découper sous la forme d'un graphique, lequel graphique peut en particulier être affiché au moins en partie en superposition sur la matière à découper de façon spécifique de la position.

5. Système selon la revendication 4 renvoyant à la revendication 3, **caractérisé en ce que** le système est conformé pour le marquage graphique de
• zones de qualité, en particulier au moyen de graphiques de couleurs et/ou de motifs différents
• contours à découper, en particulier au moyen de lignes, et/ou
• catégories de tri, en particulier au moyen de couleurs et/ou de textes différents et/ou de symboles différents.

6. Système selon la revendications 5, **caractérisé en ce qu'**il est conçu de telle manière que l'affichage du marquage graphique soit adapté à la position et à l'orientation du dispositif d'affichage par rapport au dispositif de coupe, de telle sorte que le marquage graphique de chaque zone de la matière à découper soit affiché dans le champ de vision de l'utilisateur de façon ajustée et superposée précisément à la forme, en particulier en continu lors d'un éventuel changement de la position et de l'orientation du dispositif d'affichage par rapport au dispositif de coupe.

7. Système selon l'une des revendications précédentes, **caractérisé en ce que** le système est conçu pour guider l'utilisateur au moyen de l'affichage, à l'aide des informations concernant la matière à découper, en particulier pour guider l'utilisateur lors du placement d'une matière à découper sur la table de coupe et/ou du tri des pièces découpées, en particulier avec un guidage de l'utilisateur au moyen de symboles graphiques.

8. Système selon l'une des revendications précédentes, **caractérisé en ce que** le système comporte une caméra pour l'acquisition d'images, en particulier d'images en direct, la caméra étant disposée sur le dispositif d'affichage ou dans un rapport spatial fixe par rapport au dispositif de coupe.

9. Système selon la revendications 8, **caractérisé en ce que** l'unité de calcul est conçue pour déterminer la position et l'orientation du dispositif d'affichage par rapport au dispositif de coupe à l'aide d'au moins une image acquise par la caméra d'au moins une partie du dispositif de coupe et/ou du dispositif d'affichage servant de référence de position, et dans lequel, en particulier dans le cas où la caméra est disposée sur le dispositif d'affichage,
• le dispositif de coupe présente spécialement pour cela des marquages optiques qui servent de référence de position et/ou
• la détermination est effectuée de façon continue à l'aide d'images acquises en continu et/ou
• la détermination est réalisée au moyen d'une coupe en marche arrière.

10. Système selon la revendications 8 ou 9, **caractérisé en ce que** le système est conçu pour effectuer automatiquement, à partir d'une ou plusieurs images acquises de la matière à découper et au moyen d'un traitement des images,
• un enregistrement de la matière à découper en question, en particulier à l'aide d'un code à barres ou d'un numéro de série, et/ou
• une reconnaissance de la nature de la matière à découper et/ou du matériau de la matière à découper, en particulier à l'aide d'une couleur, d'une structure et/ou d'une texture de surface de la matière à découper, et/ou
• une détermination de la position réelle de la matière à découper déposée sur la table de coupe, qui est utilisée pour positionner l'outil de coupe, et/ou
• une reconnaissance de zones de qualité de la matière à découper, dans laquelle, en particulier, des informations sur la matière à découper spécifiques de la matière à découper en question sont affichées pour l'utilisateur à l'aide des données ainsi obtenues.

11. Système selon l'une des revendications précédentes, **caractérisé en ce que** le système comprend une unité de capteur et est conçu pour calculer une position et une orientation du dispositif d'affichage par rapport au dispositif de coupe à l'aide de données de mesure de l'unité de capteur, l'unité de capteur comprenant en particulier
• une unité de mesure à inertie, en particulier avec un capteur d'accélération et/ou un gyroscope, et/ou
• un capteur de profondeur et/ou
• un capteur de mesure de la distance et/ou
• un compas.

12. Système selon l'une des revendications précédentes, **caractérisé en ce qu'**il est conçu pour la commande du dispositif de coupe par l'utilisateur au moyen du dispositif d'affichage, en particulier au moyen d'une commande gestuelle lorsqu'il existe un dispositif d'affichage avec caméra.

13. Système selon l'une des revendications précédentes, **caractérisé en ce que** la table de coupe comprend un convoyeur à bande et le dispositif de coupe comprend un entraînement pour entraîner le convoyeur à bande au moyen duquel la matière à découper reposant sur la table de coupe peut être transportée dans une direction, en particulier sensiblement horizontale, sur le dispositif de coupe, en particulier pour entrer et/ou sortir de la zone de coupe.

14. Procédé pour les travaux de découpe de matière à découper, en particulier de matière à découper sensiblement plate comme des panneaux ou feuilles de papier, de carton, de carton ondulé, de film, de cuir, de textile, de plastique, de mousse ou de bois, dans lequel le dispositif de coupe présente
• une table de coupe pour la dépose de matière à découper et
• un outil de coupe disposé au-dessus de la table de coupe, qui est ajustable dans une zone de coupe parallèle à la table de coupe et au moyen duquel une matière à découper posée sur la table de coupe peut être découpée dans la zone de coupe,
dans lequel, dans le cadre du procédé, un affichage d'un dispositif d'affichage à réalité augmentée conçu pour être porté par un utilisateur affiche des informations sur la matière à découper
• dans le champ de vision de l'utilisateur, d'une manière lisible pour celui-ci,
• de manière adaptée à la position et à l'orientation du dispositif d'affichage par rapport au dispositif de coupe et
• en les associant à une position réelle et/ou de consigne de la matière à découper.

15. Produit de programme d'ordinateur comportant un code de programme qui est stocké sur un support lisible par machine, permettant de pour la commande et l'exécution du procédé selon la revendication 14, en particulier quand le programme est exécuté sur une unité de traitement de données électronique réalisée comme l'unité de commande d'un système selon l'une des revendications 1 à 13.
